# EUROPEAN PATENT APPLICATION

(11) **EP 2 463 020 A2**
(43) Date of publication of application: **13.06.2012**
(21) Application number: 10760369.8
(22) Date of filing: 23.07.2010
(51) Int. Cl.: B01F 17/32, D21H 21/16, B01F 17/34

(54) **EMULSIFIER COMPOSITION COMPRISING AN ALKENYL SUCCINIC ANHYDRIDE, METHOD, AND USE THEREOF**

(30) Priority: 03.08.2009 ES 200901709
(71) Applicant: Costas Poch, Juan José, 08960 Sant Just Desvern (Barcelona) (ES)
(72) Inventor: Costas Poch, Juan José, 08960 Sant Just Desvern (Barcelona) (ES)
(74) Representative: Curell Suñol S.L.P.
(86) International application number: PCT/ES2010/000322
(87) International publication number: WO 2011/015684

(57) **Abstract**

Emulsion composition with one alkenyl-succinic anhydride and corresponding methods and uses. The invention relates to a composition capable of emulsifying alkenyl-succinic anhydrides having general formula (I), used to confer hydrophobic properties to paper, providing, also, greater resistance to lactic acid and to hydrogen peroxide. It simplifies and improves the current way of using the ASA. It considerably reduces the formation of succinic acid particles or of the salts thereof during the paper production process. It allows simplifying the metering unit. The composition can be used not only for internal sizing, but also for surface sizing, both in a sizing press, and in a spray, mixing it or not with starch or other compatible products, on the paper making table or form, without problems in the spray nozzles, achieving an excellent sizing at low costs and without the danger of drying phases.

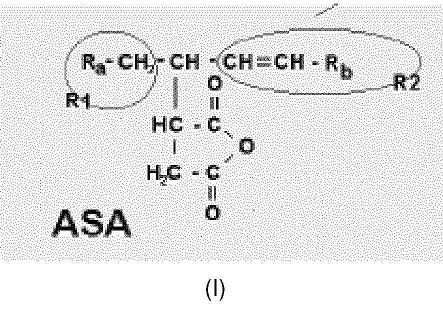

## Description

### Field of the invention

The invention relates to an emulsion composition with one alkenyl-succinic anhydride having general formula I 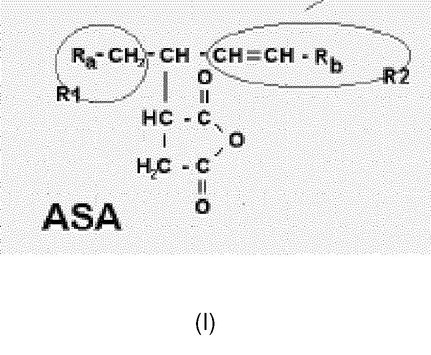
where Ra is a C₁₂-C₁₈ alkane, and
Rb is a C₁₂-C₁₈ alcane.

The invention also relates to a method for manufacturing an emulsion composition according to the invention, to a method for producing an aqueous emulsion with one alkenyl-succinic anhydride having formula I, and to a method for producing paper or board.

The invention relates to some uses of a composition according to the invention.

### State of the art

One of the main characteristics of paper and similar products is their hydrophobicity or resistance to the penetration of water or other liquids. The main methods for conferring hydrophobic properties to paper are internal sizing, which affects the whole structure of the paper, surface sizing, more or less limited to the surface of the paper, and combinations of both methods. The most usual internal sizing agents are derived from colophony resins, alkyl keten dimers, alkenyl-succinic anhydrides (usually abbreviated to ASA), and styrene/acrylic derivatives. In surface applications we find variants of the same chemical bases.

The ASA (alkenyl-succinic anhydrides) used for making paper, board and similar products, are compounds having general formula I 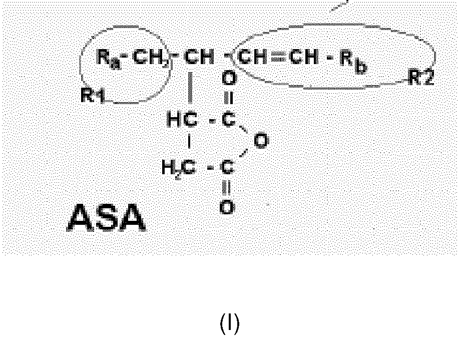
where Ra is a C₁₂-C₁₈ alkane, and
Rb is a C₁₂-C₁₈ alkane.

The ASA have been used successfully for sizing paper because they provide many advantages. They are reactive sizing agents, in other words, the product molecule reacts with the hydroxyl groups of the cellulose, such that covalent bonds develop. Therefore the sizing obtained with these products is much more resistant to the penetration of liquids than that which is obtained with resin, since the reaction with the cellulose is virtually irreversible. Furthermore, due to the speed of the reaction with the fibres, an almost instant sizing is achieved, with the maximum degree of sizing being reached at the end of the drying stages, without the need for subsequent curing. The economic performance of these products is very high and sizing is obtained with doses lower than 3 kg. per ton of dry paper, depending on the paper qualities, whereas with other sizing products, such as the alkyl ketene dimers, or resins, between 6 and 15 Kg. are usually needed per ton of paper to obtain similar results.

The reaction of ASA with cellulose is as follows

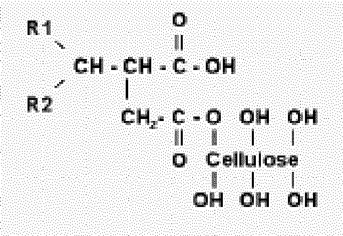

To be used correctly, the ASA has to be emulsified in the paper mill and this must be used very quickly so as to limit the hydrolysis that may lead to serious problems of deposits forming on the wet part of the paper machine, mainly in the first felts. It is important to mention that with the ASA there is always a compromise between the reaction with the cellulose and the hydroxyl groups of the water. This hydrolysis phenomenon reduces the efficiency of the sizing and can also lead to undesirable side effects, such as the already mentioned deposits that can make it impossible to make the paper. The hydrolysis reactions can be acid hydrolysis and alkaline hydrolysis. The alkaline hydrolysis is the same as the acid hydrolysis, except that it forms the salts corresponding to the diacid and the medium, normally calcium salts. These salts are particularly adhesive and prone to forming deposits.

With reference to sizing with ASA, it is also important to mention the problem of making paper and board for packaging liquids (liquid packaging board). At present these boards cannot be sized with ASA because they need to have a high resistance to lactic acid and hydrogen peroxide, as they are sterilized with these products, and sizing with conventionally used ASA does not confer these resistances. Furthermore, the products and systems used at present to provide resistance to lactic acid and to hydrogen peroxide do not allow using calcium carbonate as the filler in these papers, which implies a major drawback since calcium carbonate, as well as being more economical than other fillers, confers a better printing quality and whiteness to the finished paper.

Emulsifying alkenyl-succinic anhydrides having general formula I is known, but the current techniques are rather complicated. The most used method is a mixture with cationic starch using a complex emulsifying machine that provides sufficient mechanical energy to maintain the stability of the hydrophobic particles in water during a short time. There are other emulsifying agents that facilitate this task but with less efficiency, and without avoiding any deposition or problem over time and based on less complicated equipment than that required with the starch, but more complicated than that used in this invention. All this has meant that the application of ASA as a sizing agent has not been generalised, because the cost of the installation is very high, its control requires continued attention and its use requires a high retention of fibres, which is only available in high production paper machines where the size of the fibres can be controlled (those that use original fibre as raw material), a difficult parameter to control in the mills that use paper cuttings or recycled paper as their raw material.

### Disclosure of the invention

The aim of the invention is to overcome these drawbacks. This aim is achieved by means of a composition of the type indicated at the beginning, **characterized in that** it comprises a nonionic surfactant and at least one cationic agent.

Effectively, the composition according to the invention is mixed simply and continually with an ASA and achieves an emulsion of the latter, so that, diluted with water, it can be added to the paper pulp in order to obtain, not only a high sizing performance on the finished paper, but also to avoid the problem of the formation of deposits of hydrolysed alkenyl-succinic anhydride salts as described above in reference to the state of the art. Also it gives the paper greater resistance to lactic acid and hydrogen peroxide, which is unique in the use of the ASA, since with the current techniques the necessary values are not achieved.

The advantages of the composition that is the object of this invention, and which constitute an innovation or improvement of the current technique are as follows:
a) Simple application. So for example, an installation can be used where two metering pumps inject, one the product of the invention, and the other, the alkenyl-succinic anhydride, into the entrance pipe of a centrifugal pump. At the exit of this centrifugal pump, wherein the said products are mixed, water is injected and the flow is led towards a second centrifugal pump, from which there emerges an aqueous diluted emulsion of disperse alkenyl-succinic anhydride that is added directly to the point of the paper circuit that is considered convenient to achieve the best sizing. Also it can be added to the bath of a sizing press or sprayed onto the end of the paper making table, mixing it or not with starch or other compatible products.
b) Reduced deposits. The special formulation of the product that is the object of this invention allows reducing, on its own, considerably the deposits of hydrolysed alkenyl-succinic anhydride, even with low fibre retentions, in comparison with the complicated traditional emulsifying system with cationic starch. It keeps the suspension stable for a longer period and reduces the formation of calcium salts.
c) lmproved sizing performance. With the ASA emulsion obtained according to this invention a much better dispersion and retention of the sizing agent is obtained, which improves the performance thereof, reducing the deposits of alkenyl-succinic anhydride that are not retained and end up hydrolysed.
d) The composition that is the object of this invention is capable of emulsifying the ASA of plant origin and the one obtained from petroleum, and, adequately formulated, together with the alkenyl-succinic anhydride, conferring to the paper or board that is sized, not only resistance to the penetration of water, inks, etc, but also the necessary resistance to the penetration of lactic acid and hydrogen peroxide that some papers and boards require, such as those used with food products and which are sterilized with the said products. When making paper or board that requires high resistance to lactic acid and peroxide, it is possible to use calcium carbonate as a filler and avail of its implied advantages, both economical and in terms of improved quality.

Preferably the surfactant is a surfactant from the group made up of alcohol ethoxylates and alkyphenol ethoxylates. Advantageously the surfactant is an alcohol ethoxylate with between 6 and 12 carbon atoms with an ethoxylation of between 3 and 6 moles of ethylene oxides (EO) or propylene oxides (PEO). It can also contain maleic anhydride derivatives. Another advantageous solution is when the surfactant is an alkyphenol ethoxylate with between 10 and 12 carbon atoms with an ethoxylation of between 20 and 40 ethylene oxide moles.

Preferably the amount of nonionic surfactant present in the composition varies between 1% and 50% by weight, and very preferably between 5% and 10% by weight of the composition total.

Advantageously the cationic agent is a cationic agent from the group made up of derivatives of aluminium (preferably aluminium sulphate), aluminium polychloride, aluminium chloride, aluminium formiate and polychlorosulphate salts.

Preferably the cationic agent is present in a proportion of at least 5% by weight, preferably between 20% and 70% by weight, calculated over the composition total.

Advantageously the composition comprises, in addition, an anionic or cationic dispersing agent. In the case of an anionic dispersing agent, preferably it is from the group made up of from alkyl benzene sulfonate sodium salts with chains of between 8 and 17 carbon atoms, sodium laurylsulfate, sodium naphthalene sulfonate and sodium lignosulfate. In the case of a cationic dispersing agent, preferably it is from the group made up of polyacrylamides with dalton molecular weights greater than 500,000, diallyl dimethyl ammonium chloride (known as PDADMAC), di-cyanoamide, and polyethyleneimines derived from the reaction between an epichlorohydrin and the dimethylamine (known as polyamines). The dispersing agent is present preferably in a proportion between 0.1% and 20% by weight, and very preferably between 0.5% and 10% by weight of the composition total.

Advantageously the composition comprises, in addition, a protective colloid which, preferably, is from the group made up of cellulose derivative, cationic starch, natural protein, polyvinyl alcohol and mixtures of the above. The protective colloid can also be advantageously a natural protein (of plant or animal origin) from the group made up of soya lecithin, casein and the salts thereof, egg albumen and vitelline. Preferably the protective colloid is in a proportion greater than 0.1 % by weight, and very preferably between 0.3% and 5% by weight of the composition total.

Advantageously the composition comprises, in addition, a resin material. The resin material must have a high content of free resin. Resin and resin material relate to the known types of resin (gum rosin, wood rosin, tall oil resin) and mixtures thereof. Preferably the resin material is a resin material from the group made up of colophony resin, modified resin, fortified resin and mixtures of the above. Modified resin which has been modified by methods already described in the state of the art, such as for example disproportional resin, hydrogenated resin, polymerized resin, sterified resin, etc. The resin material is very preferably fortified resin, in other words, the Diels-Alder adduct obtained from the reaction between resin, optionally modified as indicated, and an á,β-unsaturated carbonyllic compound, such as pentaerytrite, fumaric acid, maleic acid or the anhydrides thereof or ester acids of acrylic and metacrylic acid. These techniques are known by an expert in the art. In this invention, the degree of fortification of the resin material can reach 18 % by weight of the á,β-unsaturated carbonylic compound, based on the total weight of the fortified resin.

The resin material is preferably in a proportion less than 25% by weight of the composition total. The proportion will depend on the need and the degree of resistance to hydrogen peroxide required for a particular application.

Advantageously the composition comprises, in addition, a synthetic sizing agent. Preferably the synthetic sizing agent is from the group made up of alkyl ketene dimer, organic isocyanate, carbomoyl chloride and mixtures of the above, and preferably it is in a proportion greater than 0.5% by weight, preferably between 2% and 10% by weight of the composition total.

The aim of the invention is also a method for making a composition according to the invention, **characterized in that** it comprises a homogenizing stage of the nonionic surfactant in water and, in the event that the composition comprises a dispersing agent and/or a protective colloid, the homogenizing stage also includes the homogenization of the dispersing agent and/or of the protective colloid in water, and a subsequent step for adding said cationic agent.

Preferably, in the event that the composition comprises a resin material, the method comprises a dispersion stage of the resin material in water, in the presence of a dispersing agent, at a temperature higher than the melting temperature of the resin material, prior to incorporating the resin material in the composition in the homogenization stage. The dispersion stage includes stirring until the dispersion stage is made up of particles of resin material. The final composition has the appearance of a yellowish, almost transparent liquid solution.

Preferably, in the event that the composition comprises an alkyl ketene dimer, the method comprises a dispersion stage of the alkyl ketene dimer in water, in the presence of a dispersing agent, at a temperature higher than the melting temperature of the alkyl ketene dimer, prior to incorporating the alkyl ketene dimer in the composition in the homogenizing stage.

If the composition comprises a resin material and an alkyl ketene dimer, then the method comprises preferably a melting stage of the resin material with the alkyl ketene dimer forming a melted mixture and a dispersion stage of the melted mixture in water, in the presence of a dispersing agent, at a temperature higher than the melting temperature of the mixture, prior to incorporating the resin material in the composition in the homogenizing stage.

The aim of the invention is also a method for preparing an aqueous solution with one alkenyl-succinic anhydride having formula I 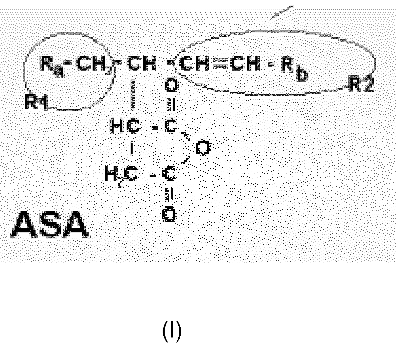
where Ra is a C12-C1₈ alkane,
Rb is a C₁₂-C₁₈alkane,
**characterized in that** a premixture is made of a composition according to the invention with said alkenyl-succinic anhydride, subsequently water is added to said premixture and it is emulsified.

The aim of the invention is also a method for making paper or board, preferably paper or board for use with food products, **characterized in that** it comprises a sizing stage wherein a composition according to the invention is used to prepare an aqueous emulsion with one alkenyl-succinic anhydride having formula I 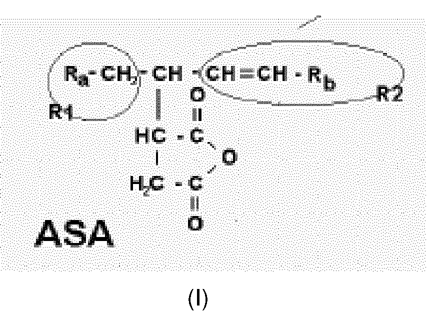
where Ra is a C₁₂-C₁₈ alkane,
Rb is a C₁₂-C₁₈alkane.

Another object of the invention is a use of a composition comprising a nonionic surfactant and at least one cationic agent as the emulsion agent for preparing an aqueous emulsion with one alkenyl-succinic anhydride having formula I 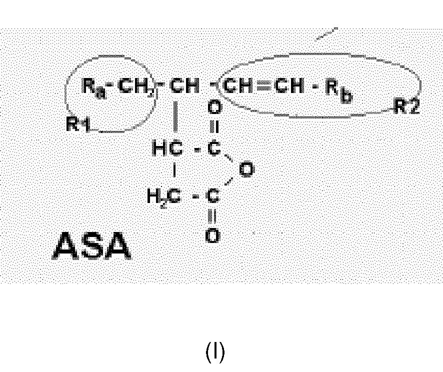
where Ra is a C₁₂-C₁₈ alkane,
Rb is a C₁₂-C₁₈alkane.

Preferably the composition is a composition like any of the ones described above.

The aim of the invention is also the a use of a composition comprising a nonionic surfactant and at least one cationic agent for making paper or board, preferably for making paper or board for use with food products. Preferably the composition is a composition like any of the others described above.

The composition described is particularly suitable for continuously emulsifying the ASA in an installation like the one described at the beginning. The diluted emulsion that leaves said installation must be used directly and immediately (although it maintains its sizing power for more than 30 minutes) to size the cellulose fibres with which the paper is made. The doses to use vary between 0.05% and 2% by weight of the ASA with respect to the dry cellulose fibres, preferably from 0.1 to 0.5 % by weight of the ASA, the doses being at all events lower than that used with the expensive and complicated system of the current technique that uses starch as the known emulsifying agent.

The composition of the invention can contain dissolved resin material, natural proteins, soluble salts thereof, surfactants and other additives already described, as well as a cationicity proportioner.

The invention is illustrated by means of the following examples which are, nevertheless, not intended to limit said invention. Parts and percentages refer to parts by weight and percentages by weight respectively, unless specified otherwise.

### Example 1

100 parts of vegetable protein were dissolved in 500 parts of an alkaline sodium carbonate solution at 10% and at a temperature of 70º C.

To this solution there were added 200 parts of surfactant of the type derived from ricinus oil ethoxylated with 40 EO moles, 1300 parts of a solution of aluminium polyhydroxychloride, which contains 7% of aluminium, 50 parts of polyvinyl alcohol and 25 parts of polyacrylamide of the 6MM Dalton cationic type and 30 % of cationic filler. Then the concentration was adjusted with water up to 2200 parts of the final product.

### Example 2

100 parts of resin and 20 parts of maleic anhydride were heated to 200º C during 2 hours under stirring. The temperature was reduced to 150º C and 5 parts of a solution at 20% of sodium hydroxide were added under slow stirring. Finally 300 parts of an animal protein solution at 10% were added, under energetic stirring. The final concentration was adjusted with water and cooled. The resulting emulsion was homogenized with 200 parts of surfactant of the type derived from ricinus oil ethoxylated with 40 moles of EO, 1200 parts of an aluminium polyphosphate chloride solution, containing 9% of aluminium, 50 parts of polyvinyl alcohol and 25 parts of polyacrylamide of the Dalton 6MM cationic type and 30 % of cationic filler. Then the concentration was adjusted with water up to 2200 parts of the final product.

### Example 3

625 parts of a commercial dispersion of alkyl ketene dimers at 16% (corresponding to 100 parts of dimer) were taken and homogenized with 200 parts of the surfactant of the type derived from ricinus oil ethoxylated with 40 moles of EO, 1200 parts of an aluminium polyphosphate chloride, containing 9% of aluminium, 50 parts of polyvinyl alcohol and 25 parts of polyacrylamide of the 6MM Dalton cationic type and 30 % of cationic filler .Then the concentration was adjusted with water up to 2200 parts of the final product.

### Example 4

100 parts of resin and 20 parts of maleic anhydride were heated to 200º C during 2 hours under stirring. The temperature was reduced to 150º C and 100 parts of alkyl ketene dimer wax were added, and it was left to melt. Once the mass had melted and was homogenized, 5 parts of a solution of 20% of sodium hydroxide were added, under slow stirring. Finally 300 parts of an animal protein solution at 10% were added under energetic stirring. The final concentration was adjusted with water and cooled. The resulting emulsion was homogenized with 200 parts of the surfactant of the type derived from ricinus oil ethoxylated with 40 moles of EO, 1200 parts of an aluminium polyphosphate chloride, containing 9% of aluminium, 50 parts of polyvinyl alcohol and 25 parts of polyacrylamide of the 6MM Dalton cationic type and 30 % of cationic filler. Then the concentration was adjusted with water up to 2200 parts of the final product.

### Example 5

10 parts of cationic starch were heated with 89 parts of water at 90º C during 10 minutes and 1 part of polamide-amide-epichlorohydin was added containing 20 % of active material.

### Example 6

30 parts of ASA were taken and 30 parts of Example 1 were added to them under energetic stirring. Next water was added up to a total of 1000 parts of emulsion.

### Example 7

30 parts of ASA were taken and 30 parts of Example 2 were added to them under energetic stirring. Next water was added up to a total of 1000 parts of emulsion.

### Example 8

30 parts of ASA were taken and 30 parts of Example 3 were added to them under energetic stirring. Next water was added up to a total of 1000 parts of emulsion.

### Example 9

30 parts of ASA were taken and 30 parts of Example 4 were added to them under energetic stirring. Next water was added up to a total of 1000 parts of emulsion.

### Example 10

30 parts of ASA were taken and 30 parts of Example 5 were added to them under energetic stirring. Next water was added up to a total of 1000 parts of emulsion.

### Example 11

Sheets of paper were prepared with a grammage of 120 g/m² from a bleached kraft eucalyptus pulp, with ph values in suspension of 7,2, according to the Tappi T205 sp-95 standard. The following table shows the average COBB values according to the Tappi T441 om-90 standard, the average resistance to peroxide values according to the lSO 87 87 standard of 1986 (Edge Wicking peroxide) and the average resistance to lactic acid values according to the same standard (Edge Wicking lactic). Then 5% of calcium carbonate was added as filler, in a thick pulp. The sizing dispersions, recently prepared in a thick pulp, were added before they dissolved, to the sheet former. No additional reagent was added. The sizing doses refer to the ASA percentage.

| Dispersion | Doses (%) | Cobb 60 (g/m2) | Peroxide Kg/m², 10 min. | Lactic Acid Kg./m²,1 hour |
|---|---|---|---|---|
| Example 6 | 0,05 | 145 | ..... | ..... |
| Example 6 | 0,1 | 105 | ..... | ..... |
| Example 6 | 0,2 | 41 | 4,12 | 3,25 |
| Example 6 | 0,3 | 22 | 1,46 | 3,08 |
| Example 6 | 0,4 | 19 | 0,94 | 2,10 |
| Example 7 | 0,05 | 140 | 4,16 | ..... |
| Example 7 | 0,1 | 100 | 2,32 | 3,70 |
| Example 7 | 0,2 | 40 | 1,93 | 2,81 |
| Example 7 | 0,3 | 22 | 0,67 | 1,93 |
| Example 7 | 0,4 | 18 | 0,38 | 1,15 |
| Example 8 | 0,05 | 150 | 5,07 | 3,61 |
| Example 8 | 0,1 | 102 | 2,81 | 2,87 |
| Example 8 | 0,2 | 45 | 2,02 | 1,26 |
| Example 8 | 0,3 | 21 | 0,86 | 0,68 |
| Example 8 | 0,4 | 17 | 0,50 | 0,29 |
| Example 9 | 0,05 | 92 | 4,18 | 3,67 |
| Example 9 | 0,1 | 61 | 2,30 | 2,91 |
| Example 9 | 0,2 | 30 | 1,96 | 1,24 |
| Example 9 | 0,3 | 19 | 0,66 | 0,65 |
| Example 9 | 0,4 | 16 | 0,37 | 0,31 |
| Example 10 | 0,05 | Transfer | ..... | ..... |
| Example 10 | 0,05 | Transfer | ..... | ..... |
| Example 10 | 0,2 | 150 | 7,30 | 4,95 |
| Example 10 | 0,3 | 90 | 4,26 | 3,80 |
| Example 10 | 0,4 | 40 | 2,61 | 2,97 |

## Claims

1. Emulsion composition with one alkenyl-succinic anhydride having formula I 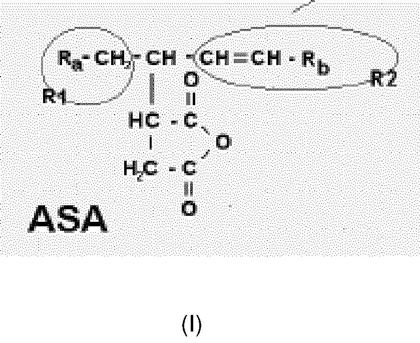
where Ra is a C₁₂-C₁₈ alkane,
Rb is a C₁₂-C₁₈ alkane,
**characterized in that** it comprises a nonionic surfactant and at least one cationic agent.

2. Composition according to claim 1, **characterized in that** said surfactant is a surfactant from the group made up of :
- alcohol ethoxylates,
- alkyphenol ethoxylates.

3. Composition according to claim 1, **characterized in that** said surfactant is an alcohol ethoxylated with between 6 and 12 carbon atoms with an ethoxylation of 3 and 6 moles of ethylene oxides or propylene oxides.

4. Composition according to claim 1, **characterized in that** said surfactant is an alkyphenol ethoxylated with between 10 and 12 carbon atoms with an ethoxylation of between 20 and 40 moles of ethylene oxides.

5. Composition according to any of the claims 1 to 4, **characterized in that** the amount of nonionic surfactant present in the composition varies between 1% and 50% by weight, and preferably between 5% and 10% by weight of the total composition amount.

6. Composition according to any of the claims 1 to 5, **characterized in that** said cationic agent is a cationic agent from the group made up of: derivatives of aluminium salts, preferably aluminium sulphate, aluminium polychloride, aluminium chloride, aluminium formiate and aluminium polychlorosulphate.

7. Composition according to any of the claims 1 to 6, **characterized in that** said cationic agent is present in a proportion of at least 5% by weight, preferably between 20% and 70% by weight, calculated on the composition total.

8. Composition according to any of the claims 1 to 7, **characterized in that** it comprises, in addition, an anionic or cationic dispersing agent.

9. Composition according to claim 8, **characterized in that** said dispersing agent is an anionic dispersing agent from the group made up of alkyl benzene sulphonate sodium salt with chains of between 8 and 17 carbon atoms, sodium laurylsulphate, sodium naphthalene sulphonate and sodium lignosulphate.

10. Composition according to claim 8, **characterized in that** said dispersing agent is a cationic dispersing agent from the group made up of:
- polyacrylamides with dalton molecular weights greater than 500.000,
- diallyl dimethyl ammonium chloride,
- di-cyanoamide, and
- polyethylenimines derived from the reaction between an epichlorhidrin and the dimethylamine.

11. Composition according to any of the claims 8 to 10, **characterized in that** said dispersing agent is present in a proportion between 0.1% and 20% by weight, preferably between 0.5% and 10% by weight of the composition total.

12. Composition according to any of the claims 1 to 11, **characterized in that** it comprises, in addition, a protective colloid.

13. Composition according to claim 12, **characterized in that** said protective colloid is a protective colloid from the group made up of cellulose derivative, cationic starch, natural protein, polyvinyl alcohol and mixtures thereof.

14. Composition according to claim 13, **characterized in that** said protective colloid is a natural protein from the group made up of soya lecithin, casein and the salts thereof, egg albumen and vitellin.

15. Composition according to any of the claims 12 to 14, **characterized in that** said protective colloid is in a proportion greater than 0.1 % by weight, preferably between 0.3% and 5% by weight of the composition total.

16. Composition according to any of the claims 1 to 15, **characterized in that** it comprises, in addition, a resin material.

17. Composition according to claim 16, **characterized in that** said resin material is a resin material from the group made up of colophony resin, modified resin, fortified resin and mixtures of the above.

18. Composition according to one of the claims 16 or 17, **characterized in that** said resin material is in a proportion less than 25% by weight of the composition total.

19. Composition according to any of the claims 1 to 18, **characterized in that** it comprises, in addition, a synthetic sizing agent.

20. Composition according to claim 19, **characterized in that** said synthetic sizing agent is a synthetic sizing agent from the group made up of alkyl ketene dimer, organic isocyanate, carbomoyl chloride and mixtures of the above.

21. Composition according to one of the claims 19 to 20, **characterized in that** said synthetic sizing agent is in a proportion greater than 0.5% by weight, preferably between 2% and 10% by weight of the composition total.

22. Method for making a composition according to any of the claims 1 to 21, **characterized in that** it comprises a homogenization stage of said nonionic surfactant and, in the event that said composition comprises a dispersing agent and/or a protective colloid, said dispersing agent and/or said protective colloid, in water and a subsequent stage of adding said cationic agent.

23. Method according to claim 22, where said composition comprises a resin material, **characterized in that** it comprises a dispersion stage of said resin material in water, in the presence of a dispersing agent, at a temperature higher than the melting temperature of resin material, prior to incorporating said resin material in said composition in said homogenizing stage.

24. Method according to one of the claims 22 or 23, where said composition comprises an alkyl ketene dimer, **characterized in that** it comprises a dispersion stage of said alkyl ketene dimer in water, in the presence of a dispersing agent, at a temperature higher than the melting temperature of said alkyl ketene dimer, prior to incorporating said alkyl ketene dimer in said composition in said homogenizing stage.

25. Method according to claim 22, where said composition comprises a resin material and an alkyl ketene dimer, **characterized in that** it comprises a melting stage of said resin material with said alkyl ketene dimer forming a melted mixture and a dispersion stage of said melted mixture in water, in the presence of a dispersing agent, at a temperature higher than the melting temperature of said mixture, prior to incorporating said resin material in said composition in said homogenizing stage.

26. Method for making an aqueous emulsion with one alkenyl-succinic anhydride having formula I 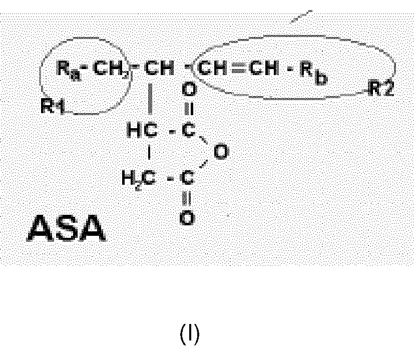
where Ra is a C₁₂-C₁₈ alkane,
Rb is a C₁₂-C₁₈ alkane,
**characterized in that** a premixture is made of a composition according to any of the claims 1 to 21 con said alkenyl-succinic anhydride, subsequently water is added to said premixture and it is emulsified.

27. Method for making paper or board, preferably paper or board for use with food products, **characterized in that** it comprises a sizing stage wherein a composition according to any of the claims 1 to 21 is used to make an aqueous emulsion with one alkenyl-succinic anhydride having formula I 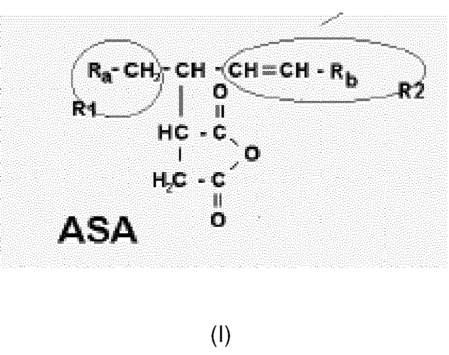
where Ra is a C₁₂-C₁₈ alkane,
Rb is a C₁₂-C₁₈ alkane.

28. Use of a composition comprising a nonionic surfactant and at least one cationic agent as emulsion agent for preparing an aqueous emulsion with one alkenyl-succinic anhydride having formula I 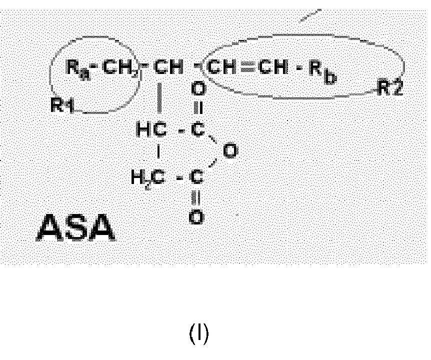
where Ra is a C₁₂-C₁₈ alkane,
Rb is a C₁₂-C₁₈ alkane.

29. Use of a composition comprising a nonionic surfactant and at least one cationic agent for making paper or board, preferably for making paper or board for use with food products.
